(19) Europäisches Patentamt / European Patent Office / Office européen des brevets

(11) **EP 2 689 651 B1**

(12) **FASCICULE DE BREVET EUROPEEN**

(45) Date de publication et mention
de la délivrance du brevet:
**15.11.2017 Bulletin 2017/46**

(51) Int Cl.:
*A01D 34/82* ^(2006.01)        *A01D 34/685* ^(2006.01)
*A01D 34/78* ^(2006.01)

(21) Numéro de dépôt: **13178267.4**

(22) Date de dépôt: **26.07.2013**

(54) **Dispositif de coupe de végétaux**

Pflanzenschnittvorrichtung

Plant cutting device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2012 FR 1257289**

(43) Date de publication de la demande:
**29.01.2014 Bulletin 2014/05**

(73) Titulaire: **Faceinvent S.A.**
**4761 Pétange (LU)**

(72) Inventeur: **Guicherd, Dominique**
**38080 Saint-Marcel-Bel-Accueil (FR)**

(74) Mandataire: **Lavialle, Bruno François Stéphane et
al**
**Cabinet Boettcher
16, rue Médéric
75017 Paris (FR)**

(56) Documents cités:
| | |
|---|---|
| CN-A- 102 388 720 | DE-A1- 2 908 416 |
| FR-A- 1 499 986 | GB-A- 2 386 813 |
| GB-A- 2 388 291 | US-A- 2 791 876 |
| US-A- 3 038 737 | US-A- 4 024 695 |
| US-A- 5 163 275 | US-A- 5 203 147 |
| US-A- 5 809 755 | US-A1- 2010 300 055 |

**Description**

Il est connu des dispositifs de coupe permettant de couper des végétaux poussant sur un sol. Ces dispositifs sont connus sous le nom de tondeuses à gazon ou débrousailleuse. L'invention concerne en particulier un dispositif pour la coupe de végétaux poussant sur un sol comportant :

- un châssis ;
- plusieurs roues avant et arrière montées à rotation sur le châssis par l'intermédiaire d'axes de roulement avant et arrière respectivement et définissant au moins une voie d'encombrement maximum formée entre certaines desdites roues ;
- plusieurs lames de coupe de végétaux montées à rotation par rapport au châssis ; et
- au moins un moteur d'entraînement d'au moins une desdites lames,
- des moyens d'alimentation dudit au moins un moteur. Il est connu de l'art antérieur les dispositifs des documents brevet GB2388291A, US4024695A, CN102388720A, US2791876A, US2010/300055A1.

OBJET DE L'INVENTION

La présente invention à pour objet de fournir un dispositif de coupe facilement maniable par un utilisateur.

RESUME DE L'INVENTION

A cette fin, il est proposé un dispositif pour la coupe de végétaux poussant sur un sol selon la revendication 1.
Dans un mode particulier de l'invention, les masses du dispositif de l'invention sont réparties pour que lorsqu'il est disposé pour rouler sur un sol horizontal, ses roues avant soient au moins 60 % plus chargée que les roues arrière.
Pour la compréhension de l'invention, on note qu'une voie correspond à la distance entre les faces extérieures des roues avant ou arrière.
La voie d'encombrement maximum est la voie du dispositif qui est la plus large. Lorsque le dispositif comporte plusieurs voies, c'est-à-dire une voie avant formée entre des roues avant et une voie arrière formée entre des roues arrière, la voie d'encombrement maximum est celle de ces voies avant et arrière qui est la plus large.
Egalement on note que le terme châssis regroupe une structure faite d'une seule pièce telle qu'un carter, ou une structure faite de plusieurs pièces reliées les unes aux autres telles que des longerons et traverses. Le châssis est ainsi une structure portée par les roues, cette structure est préférentiellement rigide.
La réduction de la distance entre les axes avant et arrière associée à une importante largeur de voie permet d'augmenter la maniabilité du dispositif en virage par rapport à un dispositif de coupe traditionnel dont la largeur de voie est inférieure à la distance entre axes avant et arrière.
En effet plus l'écartement entre deux roues d'un même train (par train on comprend une paire de roues avant ou une paire de roues arrière) est important et moins ces roues génèrent de couple s'opposant au virage de ce train sur le plan de roulement (mouvement de lacet). Par ailleurs, plus l'écartement entre les axes de roues avant et arrière est réduit et moins ces roues avant et arrière seront résistantes au virage du dispositif sur le sol. Ainsi en faisant en sorte que la voie d'encombrement maximum soit supérieure à la distance entre les axes des roues avant et arrière on réduit le couple du dispositifs s'opposant à un changement de direction d'avancement.
On préfère donc avoir une distance d'entre axes inférieure à la moitié de la voie maximale entre roue car cela facilite la maniabilité en virage du dispositif.

BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

- la figure 1 est une vue en perspective d'un dispositif de coupe de végétaux selon un premier mode de réalisation de l'invention intégrant des coupe bordures latéraux ;
- les figures 2a, 2b, 2c sont des figures en vue de dessus du dispositif de tonte selon l'invention se déplaçant respectivement en ligne droite, en virage à droite et en virage à gauche ;
- la figure 3 est une vue en perspective d'un dispositif de coupe de végétaux selon un second mode de réalisation de l'invention plus compact, doté d'un carter et d'une grille de protection de lames ;
- la figure 4 est une vue de côté du dispositif de coupe de la figure 3 ;
- la figure 5 représente une vue de dessus du dispositif de la figure 1 alors qu'il est utilisé pour couper des bordures en angle droit ;

- la figure 6a est une vue, en perspective d'une partie inférieure frontale du dispositif de la figure 5 illustrant une grille de projection des trois lames frontales ;
- la figure 6b est une vue en coupe transversale de cette même partie frontale de la figure 6a illustrant les moteurs d'entraînement de lames et la grille de protection de ces lames ;
- la figure 7 est une vue en perspective schématique d'un dispositif de coupe similaire à celui présenté à la figure 1 et sur lequel on voit une batterie d'alimentation du dispositif et un module de pilotage ;
- la figure 8 est une vue de côté d'une partie avant du dispositif de coupe selon un troisième mode de réalisation pour lequel on voit que la roue en pointillés est en forme d'anneau permettant le passage d'une lame dans une zone centrale de la roue ;
- les figures 12A, 12A1, 12B, 12B1, 12C, 12D, 12E présentent des vues de dessus schématiques de plusieurs modes alternatifs de réalisation du dispositif selon l'invention ;

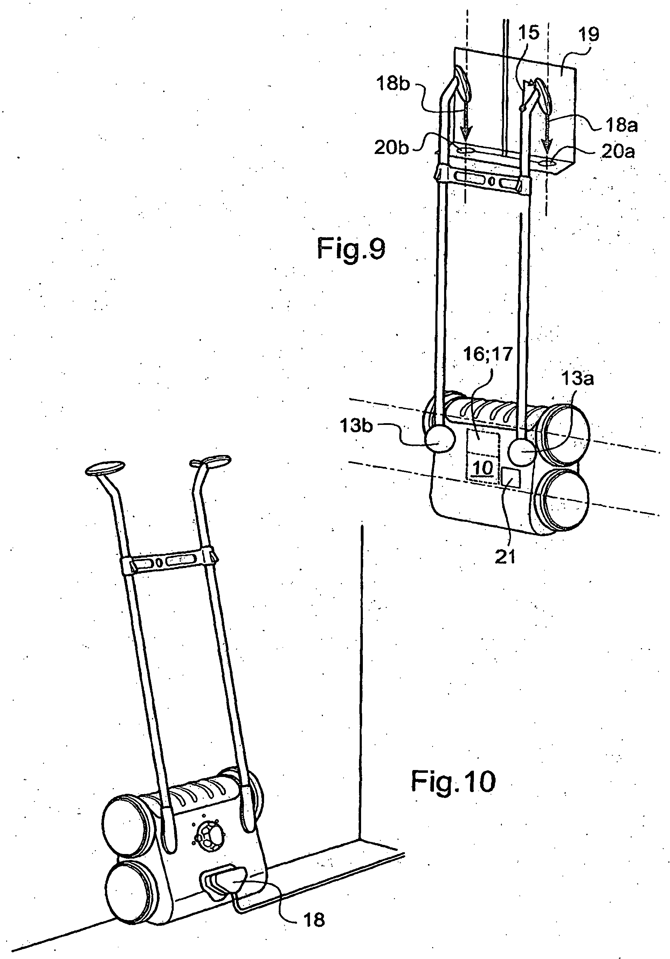

- la figure 9 présente un mode de réalisation du dispositif de coupe selon l'invention pour lequel les manches sont équipés de moyens de suspension sur un support mural et de moyens de recharge électrique via des connecteurs placés sur les manches et couplés électriquement avec des connecteurs placés sur le support ;
- la figure 10 est un mode de réalisation de l'invention pour lequel la recharge électrique est effectuée via un connecteur disposé sur le châssis ;

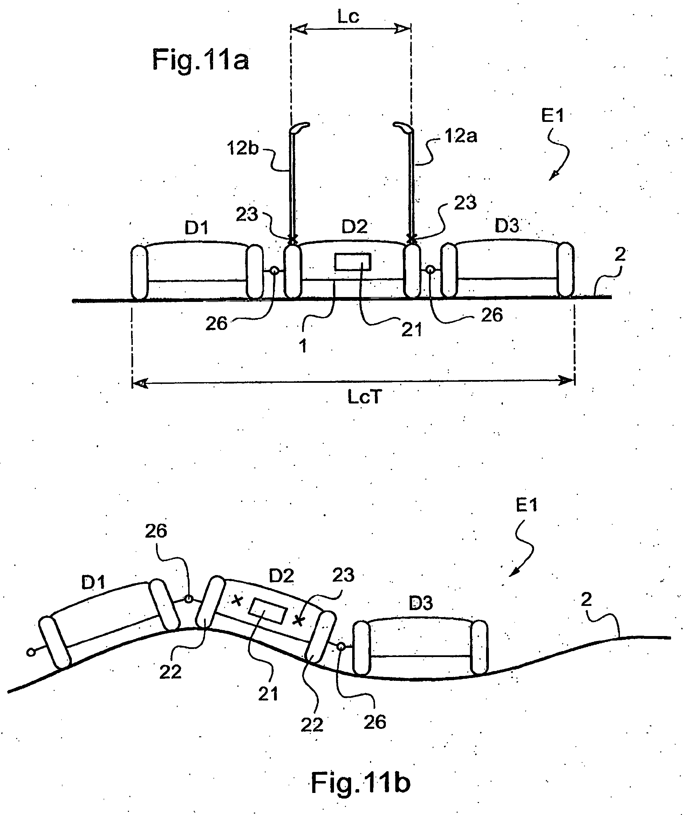

- la figure 11a présente une vue de face d'un ensemble de coupe selon l'invention comportant plusieurs dispositifs de coupe couplés entre eux de manière articulée, sur cette figure 11a, le déplacement de l'ensemble est commandé manuellement via des manches ;
- la figure 11b est une vue de face de l'ensemble de coupe de la figure 11a mais sur lequel les manches ont été retirés, cet ensemble étant alors pilote automatiquement via un module de pilotage intégré dans l'un au moins des dispositifs de coupe couplés.

## DESCRIPTION DETAILLEE DE L'INVENTION

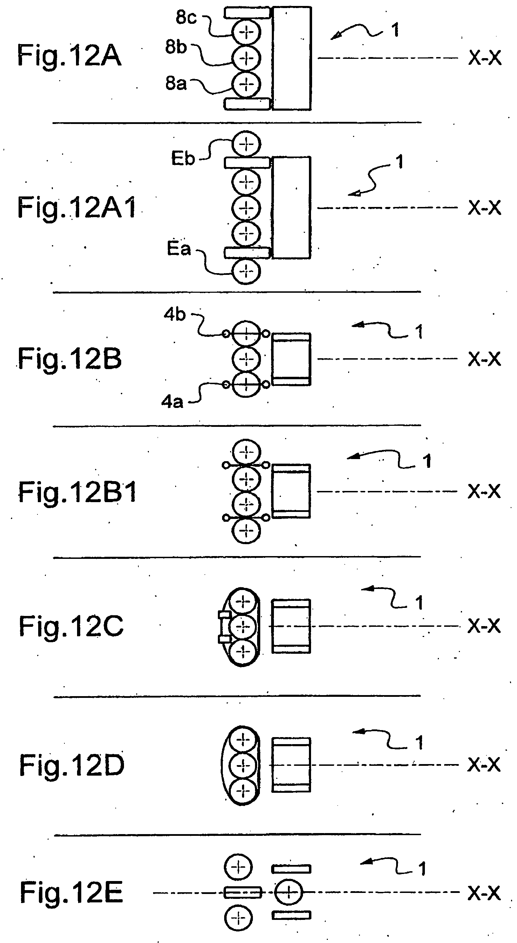

Comme indiqué précédemment l'invention concerne un dispositif de coupe de végétaux qui est en forme de tondeuse / débrousailleuse portée par des roues. Ce dispositif comporte un châssis 3 qui est monobloc sur tous les modes de réalisation présentés à l'exception des modes des figures 12C et 12D pour lesquels ce châssis est articulé. Une partie de ce châssis articulé porte des roues arrière et l'autre partie porte des roues avant.

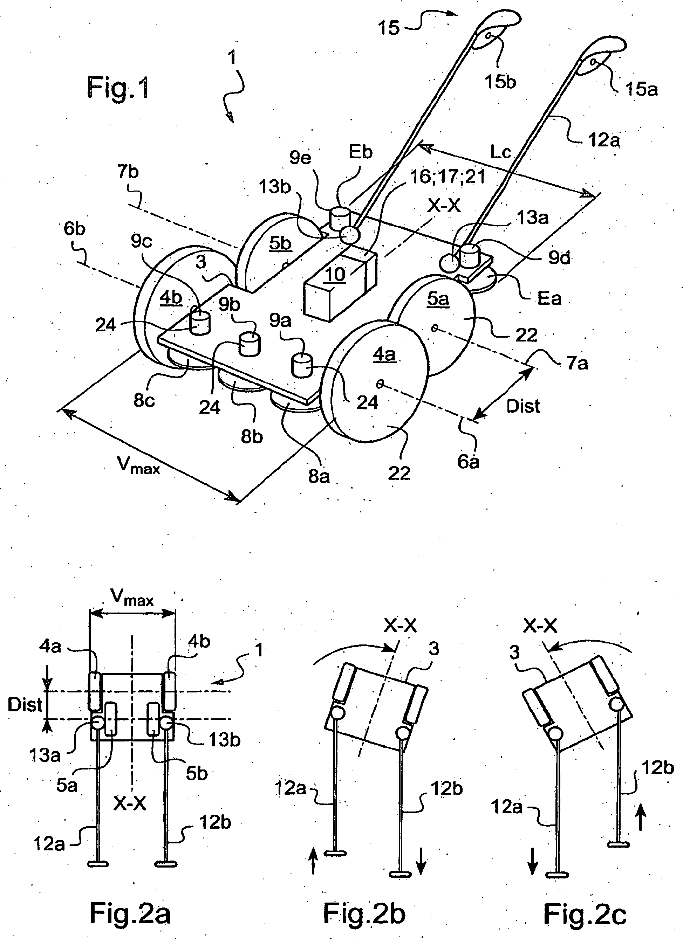

Les figures 1, 2a, 2b, 2c, 3, 4, 5, 6a, 6b, 7, 8, 12A, 12A1, 12B, 12B1, 12C, 12D, 9, 10, 11a et 11b, illustrent un dispositif comportant quatre roues réparties en un train de roues avant 4a et 4b montées à rotation par rapport au châssis 3 et un train de roues arrières 5a, 5b également montées à rotation par rapport au châssis 3. Dans le mode de réalisation de la figure 12E le dispositif comporte trois roues réparties en un train de roues avant ou arrière et en une autre roue avant ou arrière seule.

La ou les roues avant 4a, 4b sont montées à rotation par l'intermédiaire d'axes de roulement avant 6a, 6b. La ou les roues arrière 5a, 5b sont montées à rotation par l'intermédiaire d'axes de roulement arrière 7a, 7b. Dans les modes de réalisation illustrés aux figures 1 à 4 et 6a à 8 et 9 à 11b les roues avant et arrière sont toujours montées de part et d'autre du châssis 3 le long de ses bords latéraux. Dans certains modes les roues avant peuvent être montées en avant du châssis comme sur les figures 12A, 12A1, 12B, 12B1, 12C et 12E. Ainsi le châssis 3 est une structure portée à distance du le sol 2 par l'intermédiaire des axes de roulement et des roues.

Chaque paire de roues d'un même train possède une voie propre mesurée entre des faces externes des roues. Dans chacun des ses modes de réalisation le dispositif selon l'invention comporte une voie d'encombrement maximum Vmax formée entre certaines de ses roues 4a, 4b, 5a, 5b. Un aspect du dispositif de l'invention est que les axes de roulement avant 6a, 6b et arrière 7a, 7b sont séparés entre eux d'une distance minimale Dist inférieure à cette voie d'encombrement maximum Vmax. Cette distance minimale Dist est la distance la plus faible séparant un axe de roulement avant d'un autre axe de roulement arrière.

Dans les modes illustrés la distance Dist est inférieure à un tiers de la voie d'encombrement maximum Vmax, ce qui facilite grandement les mouvements en lacet du dispositif sur le sol, comme illustré sur les figures 2a et 2b.

Le châssis porte plusieurs lames chacune montée à rotation par rapport au châssis selon un axe de rotation propre à chaque lame 8a, 8b, 8c, 8d, 8e, 8f.

Les axes de rotation 25a, 25b, 25c des lames 8a, 8b, 8c sont parallèles entre eux et alignés sur la largeur de coupe Lc.

Dans chacun de ses modes de réalisation le dispositif comporte aussi plusieurs moteurs électriques d'entraînement 9a, 9b, 9c, 9d, 9e, 24 des lames, en l'occurrence un moteur d'entraînement par lame à entraîner. Ces moteurs sont assemblés au châssis 3 de manière que leurs axes de rotation soient perpendiculaires au plan de roulement du dispositif.

Des moyens d'alimentation 10 comportant au moins une batterie 16 et des moyens de charge 17 de cette batterie 16 sont fixés sur le châssis 3 et permettent d'alimenter ces moteurs électriques 9a, 9b, 9c, 9d, 9e, 24.

Le dispositif est prévu pour se déplacer principalement en ligne droite selon un axe principal de déplacement noté X-X qui s'étend entre les roues avant et/ou entre les roues arrière. Cet axe X-X est parallèle aux plans de roulement des roues. En déplacement en ligne droite le dispositif se déplace selon une trajectoire parallèle à son axe X-X.

Dans chacun des modes de réalisation de l'invention les lames 8a, 8b, 8c, 8d, 8e, 8f sont disposées de manière à couvrir une largeur de coupe Lc, mesurée perpendiculairement à l'axe principal X-X, supérieure à la largeur de coupe d'une seule des lames. En d'autres termes les lames sont mises côte à côte pour former une coupe large à l'aide de lames courtes par rapport à la largeur de coupe Lc.

Ceci permet de faire en sorte que la distance minimale Dist séparant les axes de roulement avant et arrière 6a, 6b, 7a, 7b soit toujours inférieure à la largeur de coupe Lc.

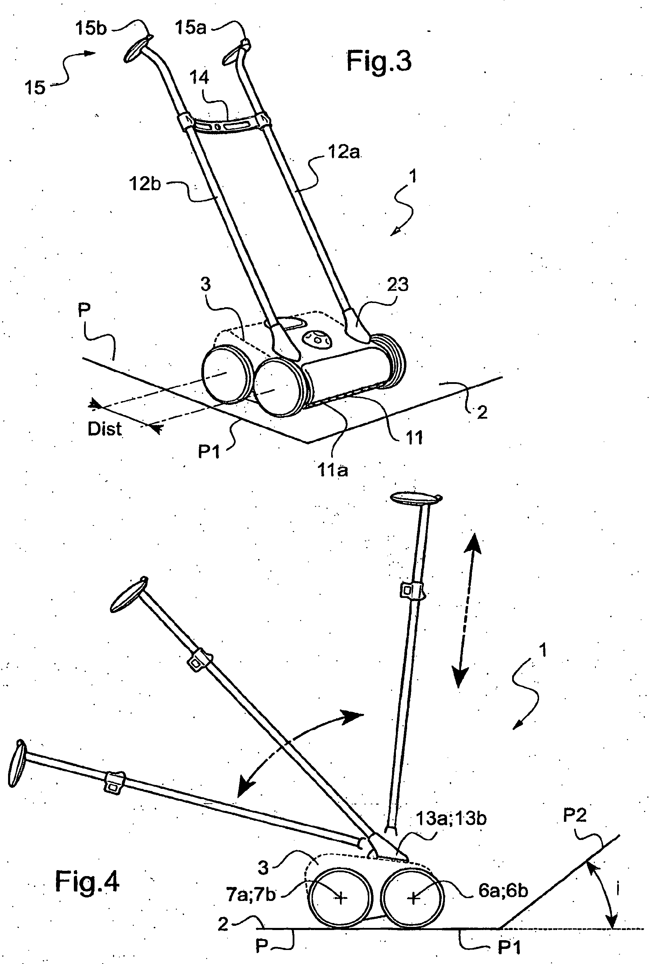

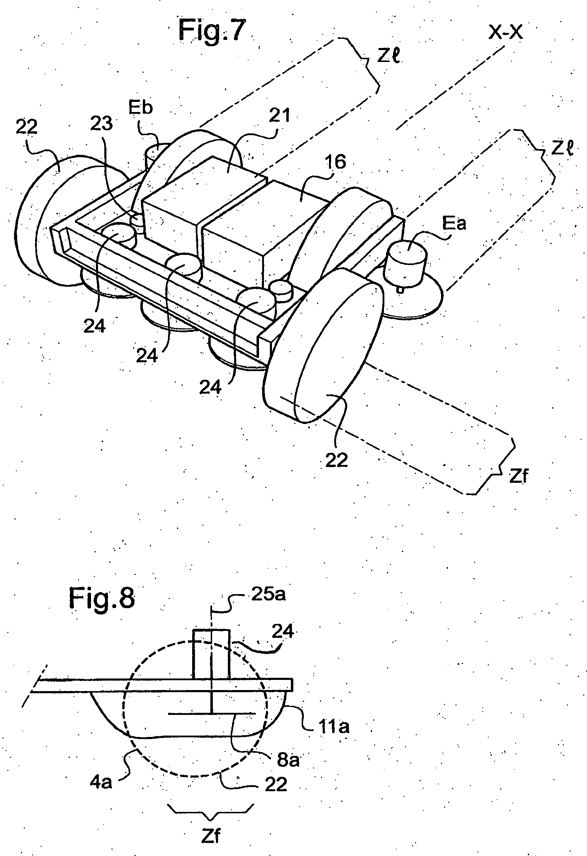

Préférentiellement la distance Dist séparant est inférieure à deux tiers de la largeur de coupe Lc, ou préférentiellement inférieure à un tiers de cette largeur de coupe comme c'est le cas sur les figures 3 et 7.

Cette largeur de coupe Lc est sensiblement égale à ladite voie d'encombrement maximum Vmax et idéalement la largeur de coupe Lc est définie par la relation :

$$\text{Vmax} - 10\% \text{ de Vmax} < \text{Lc} < \text{Vmax} + 10\% \text{ de Vmax}.$$

On constate qu'en combinant ces caractéristiques, le dispositif peut présenter, pour un encombrement réduit, une grande largeur de coupe tout en étant maniable.

Chaque moteur rotatif 9a, 9b, 9c, 9d, 9e, 24 entraîne chacun une des lames 8a, 8b, 8c, 8d, 8e, 8f. L'entraînement à rotation d'une lame se fait selon un axe de rotation de lame 25a, 25b, 25c qui est confondu avec l'axe de rotation du moteur correspondant 24 et perpendiculaire à un plan de roulement P. La trajectoire d'une lame est donc en forme de disque dans un plan parallèle au plan de roulement P.

Ce plan de roulement P est un plan théorique sur lequel les roues peuvent rouler simultanément. Idéalement chaque axe de rotation d'une lames est orienté par rapport à ce plan de roulement d'un angle de 90° à +/-20°. Idéalement les axes de rotation des lames 25a, 25b, 25c sont parallèles entre eux et perpendiculaires au plan P.

Une lame peut être formée d'une seule pièce tournante couplée au moteur ou être formée avec plusieurs pièces tournantes.

L'invention permet de définir une largeur de coupe. Lc importante à l'aide de plusieurs lames de tailles réduites et plusieurs moteurs de puissances réduites. A largeur de coupe équivalente, cette solution est moins encombrante qu'une solution utilisant une seule lame et un seul moteur. Par ailleurs, on peut grâce à l'invention, utiliser plusieurs moteurs de tailles et puissances réduites au lieu d'un seul moteur plus coûteux est de taille importante.

Le démarrage du dispositif de coupe est facilité car chaque lame possède une inertie réduite par rapport au cas où l'on aurait qu'une seule lame couvrant la largeur de coupe.

L'utilisation de plusieurs lames plutôt qu'une seule lame pour former une largeur de coupe Lc permet d'avoir une largueur de coupe importante sans devoir allonger le châssis 3. C'est en partie grâce à cette caractéristique que l'on peut compacter le dispositif de l'invention en rapprochant les axes de roulement 6a, 6b, 7a, 7b des roues avant et arrière 4a, 4b, 5a, 5b d'une distance inférieure à la langueur de coupe Le. Typiquement dans les modes de réalisation des figures 3, 4, 5, 7, 9 et 10 la largeur de coupe Lc est de 50cm, la longueur du châssis est de 30cm avec un entre axes Dist des roues avant et arrière inférieur à 20cm et avec une hauteur de châssis portée par ses roues qui est inférieur à 20cm. Une lame de coupe est longue de 10 à 15cm. Avec une telle compacité, on peut générer un dispositif de coupe léger ayant un poids préférentiellement inférieur à 5Kg, le rendant d'autant plus maniable. Typiquement, comme on le voit sur les figures 1, 5, 6a, 7, 12A, 12A1, 12B, 12B1, 12C, 12D, les axes de rotation 25a, 25b, 25c des lames peuvent être disposés pour former lorsque vus selon le plan de roulement P (c'est-à-dire en vue de dessus ou en vue de dessous) un alignement des axes formant une largeur de coupe Lc perpendiculaire à l'axe d'avancement principal X-X. Comme on le voit sur lés figures 12A, 12A1, 12B, 12C, 12D les trois axes de rotation des lames sont parallèles entre eux et alignés.

Comme on le voit sur les figures 1, 5, 7 certaines des lames 8e, 8f peuvent être disposées à distance de la zone de coupe frontale Zf (formée par les lames 8a, 8b, 8c) pour former une zone de coupe latérale Z1. Pour cela on a un ensemble de coupe latérale droite Ea et un ensemble de coupe latérale gauche Eb respectivement disposés le long des côtés de la structure portée 3. Chacun de ces ensembles de coupe latéral comporte un moteur électrique 24 propre et une lames tournant parallèlement au plan de roulement P lorsque ce moteur est alimenté par les moyens 10.

Chaque lame des ensembles de coupe latérale Ea, Eb s'étend jusque dans le plan de roulement des roues formant la voie la plus large Vmax.

De cette manière le passage de la roue définie la limite de la coupe latérale.

Sur les figures 12A, 12A1, 12B, 12B1, 12C, 12D, 12E Les lames sont symbolisées par des cercles leurs axes de rotation respectifs passant par les centres des cerclés. Sur ces mêmes figures, les roues sont symbolisées par des petits rectangles alors que le châssis 3 est lui symbolisé par un grand rectangle.

Dans le cas de la figure 12E les axes de rotation sont disposés en triangle, avec deux des trois axes de rotation disposés perpendiculairement à l'axe principal d'avancement du dispositif X-X, ces deux axes pouvant être placés à proximité de l'avant ou de l'arrière du dispositif.

Comme sur les figures 1 et 12A1 les axes de rotation de lames peuvent être disposés sur des parties latérales droite et gauche du châssis 3 de manière à ce que ces lames forment des coupe bordures. On note que les lames des coupe bordure peuvent aussi être remplacées par des fils. Ainsi le dispositif selon l'invention peut comporter des lames pour la coupe frontales et des fils pour la coupe latérale.

Conformément aux modes des figures 12B, 12B1 et 8, certaines au moins des roues peuvent être annulaires en forme d'anneaux vides en leurs centres. Dans ce mode certaines au moins des lames peuvent être disposées de manière que ces lames en rotation s'étendent à l'intérieur de l'anneau. Ce mode est présenté à la figure 8 où l'on voit la roue 4a en pointillés et la lame 8a dont la trajectoire s'étend à l'intérieur de la roue 4a. Dans ce mode la roue en forme d'anneau s'étend entre deux barres 11a de la grille de protection 11 de lame 8a. La roue 4a en forme d'anneau peut être montée à rotation par des galets roulant sur un chemin de roulement placé à l'intérieur de l'anneau. La roue 4a en forme d'anneau peut aussi avoir la forme d'un roulement à billes étanches dont la bague intérieure est fixée au châssis 3 et dont la bague extérieure, tournante par rapport à la bague intérieure, roule sur le sol. Dans ces deux cas la roue en anneau peut être motorisée 22.

Dans le cas particulier des figures 12C et 12D le châssis est articulé avec une partie avant portant des lames définissant une zone de coupe frontale et une partie arrière portant les manches et les moyens d'alimentation 10. Dans le mode de la figure 12C la partie avant du châssis porte deux roues avant et la partie arrière les deux roues arrière. Dans le cas de la figure 12D la partie arrière du châssis porte à la fois les roues avant.et arrière et la partie avant du châssis qui porte les lames est dotée d'un sabot glissant sur le sol pour maintenir les lames à distance.

Comme on le voit en particulier sur la figure 4, les roues du dispositif 4a, 4b, 5a, 5b sont dimensionnées et disposées de manière que lorsque le dispositif roule sur un sol 2 formé de premier et second plans P1, P2 inclinés l'un par rapport à l'autre d'un angle d'inclinaison i compris entre 40 et 60° et lorsque le dispositif passe en roulant d'un plan à l'autre seules les roues sont en contact avec le sol 2. Ainsi lors de ce passage, le châssis 3 et les lames de coupe 8a, 8b, 8c, 8d, 8e, 8f restent toujours à distance de chacun de ces premier et second plans P1, P2.

Pour cela le dispositif 1, vu de côté comme illustré sur la figure 4, a ses roues qui s'étendent au-delà des bords avant et arrière du châssis 3 pour limiter le risque de contact du châssis avec le sol. Toujours selon cette même vue de côté illustrée à la figuré 4, on voit que les lames sont cachées par les roues toujours de manière à limiter un risque de contact lames / sol.

Comme on le voit sur chacun des modes de réalisation présentés aux figures 1, 2a, 2b, 2c, 3, 4, 9, 10, 11a le dispositif est prévu pour comporter au moins un manche de guidage, en l'occurrence deux 12a, 12b, fixés au châssis 3.

Par manche de guidage 12a, 12b on entend un manche qui permet à l'utilisateur de déplacer le dispositif en poussant ou en tirant le manche.

Chaque manche de guidage 12a, 12b est assemblé audit châssis 3 par une articulation 13a pour le manche 12a et 13b pour le manche 12b. Chaque articulation 13a, 13b portée par le châssis 3 pour assembler un manche de guidage correspondant 12a, 12b est adaptée à permettre un débattement conique du manche de guidage qu'elle articule par rapport au châssis 3.

Ces articulations 13a, 13b sont portées par le châssis 3 et ont toutes une fonction élastique adaptée à exercer un effort de rappel de manche vers une position fixe par rapport audit châssis 3.

En l'occurrence, chaque manche est lié au châssis 3 par une liaison rotule formant une des articulations 13a ou 13b. Comme on le voit sur les figures 2a, 2b, 2c et 4, chaque liaison rotule 13a, 13b permet de pivoter le manche latéralement et verticalement par rapport au châssis.

Dans un mode de réalisation préférentiel, chaque liaison rotule 13a, 13b entre un manche 12a, 12b et le châssis est réalisée par des première et seconde liaisons pivots. Chaque première liaison pivot présente un axe de pivotement incliné entre 60° et 90° par rapport au plan de roulement des roues P et préférentiellement incliné de 90°, c'est-à-dire perpendiculaire au plan de roulement P. Chaque seconde liaison pivot relie un manche correspondant 12a, 12b à la première liaison pivot correspondante, cette seconde liaison pivot étant d'axe de pivotement perpendiculaire à l'axe de pivotement de la première liaison pivot. Ainsi chacune des premières liaisons pivot permet d'orienter le manche qui lui correspond autour d'axes perpendiculaires au plan de roulement, alors que chaque seconde liaison pivot permet une orientation du manche dans des plans perpendiculaires au plan de roulement P. Le fait que chaque manche 12a, 12b soit lié au châssis pas deux liaisons pivot sensiblement d'axes perpendiculaires au plan de roulement permet, comme illustré aux figures 2a, 2b, et 2c, une maniabilité importante du dispositif 1 dans le plan de roulement P. La liaison d'un manche 12a, 12b via une seconde liaison d'axe parallèle au plan de roulement P permet, comme illustré sur la figure 4, une importante maniabilité verticale de la tondeuse.

La figure 2a illustre une vue de dessus de la tondeuse de la figure 1 alors que ses manches 12a, 12b sont orientés parallèlement à son axe principal d'avancé X-X. Comme on le voit sur cette figure 2a, la distance Dist entré les axes des roues avant (ces axes des roues avant sont ici confondus) et les axes des roues arrières (ces axes des roues arrières sont aussi confondus entre eux) est inférieure à un tiers de la voie d'encombrement maximum Vmax, ce qui facilite le pivotement du châssis par déplacement relatif des manches rotulants sur le châssis.

La liaison rotule est préférentiellement dotée de moyens élastiques pour ramener le manche vers une position fixe par rapport à la structure portée 3. Chaque manche a une mobilité d'au moins 30° de rotation, préférentiellement d'au moins 90°, dans un plan vertical parallèle à l'axe principal d'avancement X-X, entre sa position fixe et sa position de mise en buté. Par cette caractéristique, il est possible de transmettre au châssis 3 des efforts de déplacement via le manche 12a, 12b tout en permettant une adaptation aux besoins ergonomiques de l'utilisateur (par exemple en pivotant chaque manche dans le plan vertical, l'utilisateur règle la hauteur de la partie du manche qu'il prend en main). La fonction élastique permet un retour du manche dans une position prédéterminée par rapport à la structure portée. Cette position prédéterminée est choisie pour se trouver à distance d'un plan de roulement P des roues avant et arrière. Ceci permet de ramener automatiquement chaque manche dans une position de préhension moyenne distante du sol.

Comme on le voit sur les figures 2a, 2b et 2c, du fait de l'articulation rotule de chaque manche au châssis 3, le châssis peut être pivoté par l'utilisateur en tirant un des manches et en poussant l'autre manche.

On voit sur la figure 4 que chacun des manches est télescopique pour permettre le réglage de sa longueur et son adaptation à la morphologie de l'utilisateur.

Comme on le voit sur la figure 3 les manches peuvent aussi être liés entre eux par une liaison transversale permettant de limiter l'écartement entre manches. Dans le mode de réalisation de la figure 3, la liaison transversale est réalisée par un lien souple 14 permettant de rapprocher les manches mais limitant l'écartement. Cette liaison transversale 14 peut aussi être rigide et articulée sur chaque manche, avec un blocage en position de l'articulation liaison transversale / manche fig 2a, dans le cas de la nécessité d'avancements rectilignes.

Dans un mode de réalisation alternatif à celui de la figure 3, la liaison transversale 14 peut être réalisée avec une barre rigide articulée à chacune de ses extrémités respectives avec un des manches respectifs. Ces fixations des manches au châssis et à la barre de liaison transversale 14 permettent de former un parallélogramme déformable facilitant la manipulation du dispositif de coupe de végétaux. Ce dispositif est ainsi plus maniable sur terrain accidenté car alors que le châssis suit le sol 2, la zone de préhension des manches reste orientable par rapport au châssis 3. L'utilisateur peut ainsi sélectionner le positionnement adéquat des manches en fonction de sa morphologie et du sol. On note que la liaison transversale 14 peut être assemblée aux manches de manière amovible de façon à permettre alternativement un mode d'utilisation avec manches indépendants comme sur les figures 1, 2a, 2b, 2c et un mode d'utilisation avec manches liés entre eux comme sur la figure 3.

Comme on le voit sur les figures 1, 3, 9, une commande 15 est portée par l'un au moins des manches et est fixée à distance du châssis 3 dans une zone de préhension de manche. Cette commande 15 est reliée aux moyens d'alimentation 10 des moteurs électriques 9a, 9b, 9c, 9d de manière qu'à détection d'un appui sur cette commande 15, ces moteurs soient alimentés.

Le moyen de commande 15 comporte au moins deux contacteurs 15a, 15b distants l'un de l'autre. Ces contacteurs sont agencés et reliés aux moyens d'alimentation 10 de manière que l'alimentation électrique des moteurs électriques 9a, 9b, 9c, 9d, 9e, 24 ne soit possible que lorsque ces deux contacteurs sont actionnés simultanément par l'utilisateur. Ceci constitue une sécurité pour l'utilisateur car les lames 8a, 8b, 8c, 8d, 8e, 8f sont normalement entraînées à rotation lorsque les deux mains de l'utilisateur sont placées au niveau des contacteurs, à distance des lames.

Les moyens de charge 10 peuvent aussi comporter un connecteur 18 placé sur le châssis comme on le voit sur la figure 10 et/ou un système de connecteurs 18a, 18b placé sur les manches de manière à être couplés avec un support 19 tant d'un point de vu mécanique pour supporter l'ensemble du dispositif que d'un point de vu électrique .pour permettre la charge des batteries 10 comme on le voit sur la figure 9.

Le système de connecteurs 18a, 18b placés sur les manches 12a, 12b comporte deux prises séparées, chaque prise étant portée par un manche correspondant. Le support 19 est prévu pour être assemblé sur un mur et comporte également un système de connecteurs complémentaire du système de connecteurs du dispositif. Pour cela, le système de connecteurs du support 19 porte deux prises 20a, 20b disposées pour être reliées électriquement avec les prises du système de connecteurs 18a, 18b. Cette connexion électrique est réalisée lorsque le dispositif de coupe est supporté par le support mural 19.

Les moyens d'alimentation 10 sont prévus pour interdire l'entraînement des lames par les moteurs 9a, 9b, 9c, 9d, 9e lorsque le système de connecteurs 18a, 18b placés sur les manches est électriquement relié au système de connecteurs porté par le support mural 19.

Comme on le voit sur les figures 3, 6a, 6b, 8, le dispositif comporte au moins une grille de protection 11 recouvrant les lames 8a, 8b, 8c. Il est également possible d'avoir une grille pour protéger un premier groupe de lame par exemple des lames d'une zone de coupe frontale et deux autres grilles pour protéger respectivement des lames des zones de coupes latérales.

La grille 11 est formée de barres 11a qui s'étendent chacune dans un plan de barre propre à chaque barre. Ces plans de barres sont perpendiculaires aux axes de roulement avant 6a, 6b. Ces barres 11a sont espacées les unes des autres d'une distance inférieure à 5 centimètres, cette distance étant préférentiellement comprise entre 5 millimètres et 5 centimètres et préférentiellement entre 1 et 3 centimètres. Les barres 11a forment une sécurité en limitant la capacité d'accès aux lames 8a, 8b, 8c. Leurs orientations respectives dans des plans perpendiculaires aux axes de roulement avant 6a, 6b permettent aux végétaux de glisser .entre deux barres parallèles 11a lorsque le dispositif 1 avance selon une direction parallèle à son axe principal d'avance X-X. Les végétaux ainsi guidés peuvent être coupés par les lames. L'usage des barres permet aussi de maintenir des végétaux en butée relative contre une barre lors de la coupe.

On note que cette grille 11 est fixée au châssis 3 de manière amovible pour permettre d'utiliser le dispositif 1 en fonction tondeuse (avec la protection de la grille), ou d'utiliser ce dispositif en fonction débroussailleuse sans grille (pour couper des végétaux de sections supérieure à l'écart entre deux barres de la grille).

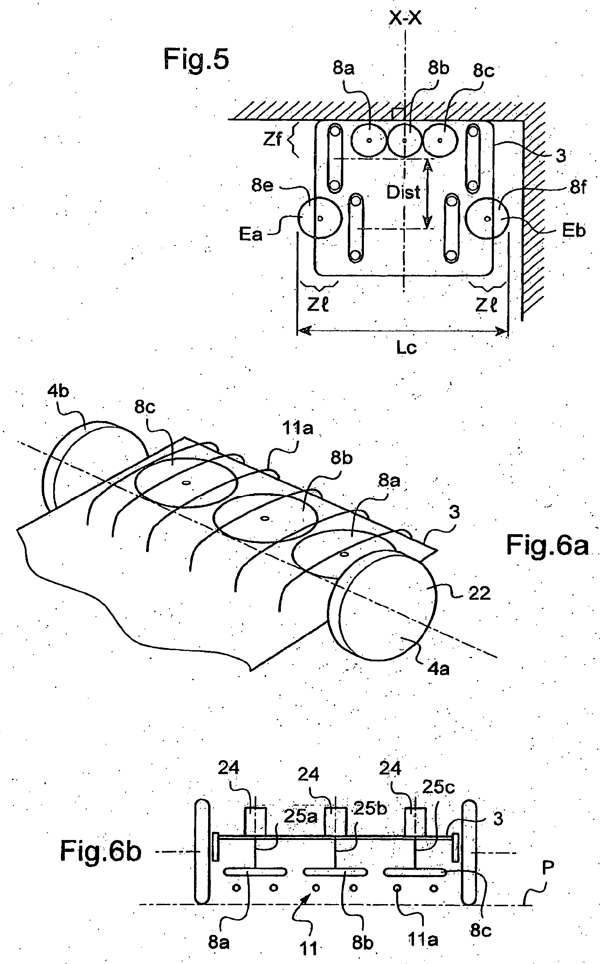

Comme c'est le cas sur les modes des figures 5, 7, 11a et 11b, certaines au moins des roues 4a, 4b peuvent être motorisées 22 de manière à entraîner le dispositif 1 sur le sol 2. Ces roues peuvent être des moteurs roue ou être entraînées par un moteur fixé au châssis.

Dans ce mode de réalisation, le dispositif comporte un module de pilotage 21 relié aux moteurs des roues motorisées 22 de manière à piloter l'alimentation de ces moteurs. Un moyen de définition d'une surface de tonte est intégré au dispositif et les manches de guidage 12a, 12b sont fixés au châssis 3 de manière amovible. Des moyens 23 pour sélectivement activer ou désactiver le module de pilotage 21 sont également intégrés au dispositif. Ces moyens 23 pour sélectivement activer ou désactiver le module de pilotage 21 sont préférentiellement couplés avec les moyens de fixation du manche 13a, 13b au châssis 3 de manière à détecter le couplage manche châssis et commander la désactivation sélective du module de pilotage 21 au moins lorsqu'un manche 12a, 12b est fixé au châssis.

Pour cette fonction les moyens de fixation 13a, 13b peuvent comporter un capteur de présence du manche tel qu'un contacteur, pour signaler l'assemblage et/ou le dé assemblage du manche au châssis. Lorsque le manche n'est pas assemblé ce capteur génère un signal commandant la désactivation du module de pilotage. Ceci permet d'éviter que le dispositif de coupe de végétaux 1 puisse fonctionner automatiquement et se déplacer seul dans la surface de tonte avec ses manches assemblés. Par cette caractéristique on évite ainsi que les manches ne gênent ce déplacement en automatique.

Lorsque le module de pilotage 21 est activé il commande le déplacement du dispositif dans la surface de tonte qui est délimitée à l'aide de moyens de définition de cette surface. Pour définir cette surface, le dispositif peut comporter une mémoire contenant des données représentatives de la surface à tondre et des moyens de localisation de la position du châssis dans cette surface. Ces moyens de localisation sont par exemple un système de positionnement par antennes émettrices permettant une triangulation.

Enfin, dans le mode de réalisation des figures 11a et 11b, on note que l'invention concerne également un ensemble de coupe E1 comportant plusieurs dispositifs de coupe 1, D1, D2, D3 tels que définis précédemment. Les châssis 3 de ces dispositifs sont assemblés entre eux à l'aide de moyens de couplage de dispositifs 26 de manière que ces dispositifs 1, D1, D2, D3 soient liés entre eux pour être mobiles simultanément sur le sol 2. Cet ensemble de coupe E1 a une largeur de coupe totale LcT supérieure à la largeur de coupe Lc de chacun des dispositifs de coupes ainsi couplés.

Ce mode de réalisation permet à l'utilisateur de former et piloter simplement un seul ensemble de coupe E1 ayant une largeur de coupe totale Lct égale à la somme des largeurs de coupe Lc de chacun des dispositifs couplés. Par cet aspect l'ensemble est modulaire pour être adaptable aux besoins de coupe.

Les moyens de couplage 26 sont ici agencés de manière que les dispositifs de coupe 1, D1, D2, D3 aient des degrés de mobilité les uns par rapport aux autres uniquement dans des plans perpendiculaires à leurs axes principaux de déplacement X-X sur le sol 2. En d'autres termes, tout dispositif de coupe couplé avec un autre dispositif de coupe via des moyens de couplage 26 est :

- autorisé par ces moyens de couplage 26 à se déplacer par rapport au dispositif auquel il est couplé selon un déplacement autour de l'axe de déplacement X-X du dispositif auquel il est couplé ; et
- est interdit par ces moyens de couplage 26 de déplacement par rapport au dispositif auquel il est couplé selon un déplacement en translation parallèle à l'axe de déplacement X-X du dispositif auquel il est couplé.

Pour cela les moyens de couplage 26 sont réalisés par des liaisons pivot non glissant reliant deux à deux les châssis 3. Ces liaisons pivot 26 ont des axes de révolution parallèles aux axes principaux de déplacement X-X des dispositifs sur le sol 2.

Les dispositifs de coupe D1, D2, D3 ainsi couplés ont leurs axes principaux X-X toujours parallèles entre eux tout en ayant une capacité de déplacement vertical les uns par rapport aux autres lorsque le sol est bossé comme c'est le cas sur la figure 11b.

L'angle de mobilité relatif entre deux châssis couplés par les moyens 26 est prévu pour. être au moins égal à 90° d'angle pour permettre à l'utilisateur de couper simultanément des végétaux se trouvant sur un sol horizontal et des végétaux se trouvant sur un sol incliné entre + ou - 45° par rapport à ce sol incliné. On note que pour rapprocher des dispositifs de coupe assemblés entre eux à l'aide de moyens de couplage 26, on peut retirer des roues de l'un.de ces dispositifs de coupe qui sont en vis-à-vis de l'autre de ces dispositifs. Ce rapprochement permet de réduire le risque d'apparition d'un espace non tondu entre deux dispositifs de coupe adjacents. Par exemple, on peut modifier le mode de réalisation des figures 11a et 11b, qui présente un dispositif de coupe central D2 placé entre deux dispositifs de coupe latéraux D1, D3, en retirant les roues des dispositifs latéraux D1 et D3 qui font face / sont en vis-à-vis du dispositif central D2. En d'autres termes, chaque dispositif latéral D1, D3 est porté sur son côté adjacent au dispositif central D2 par les roues du dispositif central D2 via les moyens d'assemblage 26.

L'invention n'est pas limitée au nombre de dispositifs de coupe assemblés les uns aux autres via des moyens d'assemblage 26 peut être de deux dispositifs de coupe, préférentiellement trois et éventuellement plus de trois dispositifs de coupe selon que l'on souhaite augmenter la largeur de coupe.

## Revendications

1. Dispositif pour la coupe de végétaux (1) poussant sur un sol (2) comportant :

   - un châssis (3) ;
   - plusieurs roues avant (4a, 4b) et arrière (5a, 5b) montées à rotation sur le châssis (3) par l'intermédiaire d'axes de roulement avant (6a, 6b) et arrière (7a, 7b) respectivement et définissant au moins une voie d'encombrement maximum (Vmax) formée entre certaines desdites roues (4a, 4b, 5a, 5b) ;
   - plusieurs lames de coupe de végétaux (8a, 8b, 8c, 8d, 8e, 8f) montéea à rotation par rapport au châssis (3) ; et
   - au moins un moteur d'entraînement (9a, 9b, 9c, 9d, 9e) d'au moins une desdites lames (8a, 8b, 8c, 8d, 8e),
   - des moyens d'alimentation (10) dudit au moins un moteur (9a, 9b, 9c, 9d, 9e), les axes se roulement avant (6a, 6b) et arrière (7a, 7b) sont séparés entre eux d'une distance minimale (Dist) inférieure à ladite au moins une voie d'encombrement maximum (Vmax) ; où le dispositif comporte :
   - deux manches de guidage (12a, 12b); et
   - deux articulations (13a, 13b) reliant chacune un de ces manches au châssis, **caractérisé en ce que** ces manches sont orientables indépendamment l'un de l'autre par rapport au châssis (3).

2. Dispositif selon la revendication 1, dans lequel les axes de roulement avant et arrière (6a, 6b, 7a, 7b) sont séparés entre eux d'une distance minimale (Dist) inférieure à la moitié de ladite au moins une voie d'encombrement maximum (Vmax) et préférentiellement inférieure à un tiers de ladite au moins une voie d'encombrement maximum (Vmax).

3. Dispositif selon l'une quelconque des revendications précédentes, comportant au moins une grille de protection (11) recouvrant les lames (8a, 8b, 8c, 8d, 8e, 8f), cette grille (11) étant formée de barres (11a) s'étendant chacune dans un plan de barre propre, chacun de ces plans de barre étant perpendiculaires audit au moins un axe de roulement avant (6a, 6b), ces barres (11a) étant espacées les unes des autres d'une distance inférieure à 5 centimètres, cette distance étant préférentiellement comprise entre 5 millimètres et 5 centimètres et préférentiellement entre 1 et 3 centimètres.

4. Dispositif selon l'une quelconque des revendications 1 à 3, dans lequel chaque articulation (13a, 13b) assemblant un manche de guidage (12a, 12b) au châssis comporté au moins une première liaison pivot dont l'axe de pivotement est incliné entre 60° et 90° par rapport au plan de roulement des roues P et préférentiellement incliné de 90° par rapport au plan de roulement P.

5. Dispositif Selon la revendication 4, dans lequel chaque articulation (13a, 13b) assemblant un manche de guidage (12a, 12b) au châssis forme une liaison rotule comportant préférentiellement, outre sa première liaison pivot, une seconde liaison pivot reliant le manche correspondant (12a, 12b) à la première liaison pivot correspondante, cette seconde liaison pivot étant d'axe de pivotement perpendiculaire à l'axe de pivotement de la première liaison pivot.

6. Dispositif selon l'une quelconque des revendications 1 à 5, dans lequel chaque articulation (13a, 13b) portée par le châssis (3) pour assembler un manche de guidage (12a, 12b) est une articulation élastique qui est adaptée à exercer un effort de rappel dudit au moins un manche vers une position fixe par rapport audit châssis.

7. Dispositif selon l'une quelconque des revendication 1 à 6, dans lequel l'un au moins desdits au moins un manche comporte, à distance du châssis (3), une commande (15) reliée aux moyens d'alimentation (10) dudit au moins un moteur (9a, 9b, 9c, 9d) de manière qu'à détection d'un appui sur cette commande (15), les moyens d'alimentation (10) alimentent le ou lesdits au moins un moteur (9a, 9b, 9c, 9d).

**8.** Dispositif selon l'une quelconque des revendications 1 à 7, dans lequel certaines au moins des roues (4a, 4b) sont motorisées de manière à entraîner le dispositif sur le sol (2), le dispositif comportant en outre un module de pilotage (21) relié à certains au moins des moteurs des roues motorisées de manière à piloter l'alimentation de ces moteurs des roues, le dispositif comportant également un moyen de définition d'une surface de tonte est ledit au moins un manche de guidage (12a, 12b) étant fixé au châssis (3) de manière amovible, ce dispositif (1) comportant en outre des moyens (23) pour sélectivement activer ou désactiver le module de pilotage (21), le module de pilotage (21), lorsque activé, étant adapté à commander le déplacement du dispositif dans cette surface de tonte.

**9.** Disposition selon la revendication 8, dans lequel les moyens (23), pour sélectivement activer ou désactiver le module de pilotage (21) sont couplés avec les moyens de fixation du manche (13a, 13b) au châssis (3) de marnière à commander la désactivation du module de pilotage (21) au moins lorsque ledit au moins un manche (12a, 12b) est fixé au châssis.

**10.** Dispositif selon l'une quelconque des revendication 1 à 9, dans lequel chacune des lames (8a, 8b, 8c) est montée à rotation selon un axe propre de rotation sensiblement perpendiculaire à un plain de roulement des roues (P).

**11.** Dispositif selon l'une quelconque des revendication précédentes, dans lequel les manches sont liés entre eux par une liaison transversale (14) adaptée à limiter l'écartement entre manches.

**12.** Dispositif selon la revendication précédent, dans lequel liaison transversle est réalisée par un lioen souple (14) adapté à autoriser le rapprochement des manches et à limiter l'écartement.

**13.** Dispositif selon la revendication précédente, dans lequel liaison transversale (14) est rigide et articulée sur chaque manche, avec éventuellement un blocage en position de l'articulation entre liaison transversale et manche.

**14.** Dispositif selon l'une quelconque des revendications 1 à 13 dans lequel ledit au moins un moteur est un moteur électrique.

**15.** Ensemble (E1) de coupe comportant plusieurs dispositifs de coupe (1, D1, D2, D3) selon l'une quelconque des revendications 1 à 14 dans lequel les châssis (3) de ces dispositifs sont assemblés entre eux à l'aide de moyens de couplage de dispositifs (26) de manière que ces dispositifs soient liés entré eux pour être mobiles simultanément sur le sol (2) et de manière que cet ensemble de coupe (E1) ait une largeur de coupe totale (LcT) supérieure à la largeur de coupé (Lc) de chacun des dispositifs de coupes ainsi couplés.

**Patentansprüche**

**1.** Vorrichtung (1) zum Schneiden von Pflanzen, die auf einem Boden (2) wachsen, umfassend:

   - ein Gestell (3);
   - mehrere Vorderräder (4a, 4b) und Hinterräder (5a, 5b), die über eine vordere Lagerachse (6a, 6b) bzw. eine hintere Lagerachse (7a, 7b) drehbar an dem Gestell (3) gelagert sind und mindestens eine Spurbreite maximaler Abmessung (Vmax) definieren, die zwischen bestimmten der genannten Räder (4a, 4b, 5a, 5b) gebildet wird;
   - mehrere Pflanzenschneidklingen (8a, 8b, 8c, 8d, 8e, 8f), die in Bezug auf das Gestell (3) drehbar gelagert sind; und
   - mindestens einen Antriebsmotor (9a, 9b, 9c, 9d, 9e) zum Antrieb mindestens einer der genannten Klingen (8a, 8b, 8c, 8d, 8e),
   - Versorgungsmittel (10) zum Speisen des genannten mindestens einen Motors (9a, 9b, 9c, 9d, 9e), wobei die vordere (6a, 6b) und die hintere Lagerachse (7a, 7b) zueinander um einen minimalen Abstand (Dist) getrennt sind, der kleiner als die genannte mindestens eine Spurbreite maximaler Abmessung (Vmax) ist; wobei die Vorrichtung umfasst:
   - zwei Führungsgriffe (12a, 12b); und
   - zwei Gelenkverbindungen (13a, 13b), die jeweils einen dieser Griffe mit dem Gestell verbinden, **dadurch gekennzeichnet, dass** diese Griffe in Bezug auf das Gestell (3) unabhängig voneinander ausrichtbar sind.

**2.** Vorrichtung nach Anspruch 1, bei der die vordere und die hintere Lagerachse (6a, 6b, 7a, 7b) zueinander um einen minimalen Abstand (Dist) getrennt sind, der kleiner als die Hälfte der genannten mindestens einen Spurbreite maximaler Abmessung (Vmax) und vorzugsweise kleiner als ein Drittel der genannten mindestens einen Spurbreite maximaler Abmessung (Vmax) ist.

3. Vorrichtung nach einem der vorhergehenden Ansprüche, umfassend mindestens ein Schutzgitter (11), das die Klingen (8a, 8b, 8c, 8d, 8e, 8f) abdeckt, wobei dieses Gitter (11) aus Stäben (11a) gebildet ist, die sich jeweils in einer eigenen Stabebene erstrecken, wobei jede dieser Stabebenen senkrecht zu der genannten mindestens einen vorderen Lagerachse (6a, 6b) ist, wobei diese Stäbe (11a) zueinander um einen Abstand beabstandet sind, der kleiner als 5 Zentimeter ist, wobei dieser Abstand vorzugweise zwischen 5 Millimeter und 5 Zentimeter und vorzugsweise zwischen 1 und 3 Zentimeter liegt.

4. Vorrichtung nach einem der Ansprüche 1 bis 3, bei der jede Gelenkverbindung (13a, 13b), die einen Führungsgriff (12a, 12b) mit dem Gestell verbindet, mindestens eine erste Schwenkverbindung umfasst, deren Schwenkachse zwischen 60° und 90° in Bezug auf die Lagerebene P der Räder geneigt ist, und vorzugsweise um 90° in Bezug auf die Lagerebene P geneigt ist.

5. Vorrichtung nach Anspruch 4, bei der jede Gelenkverbindung (13a, 13b), die einen Führungsgriff (12a, 12b) mit dem Gestell verbindet, eine Kugelgelenkverbindung bildet, die vorzugsweise außer ihrer ersten Schwenkverbindung eine zweite Schwenkverbindung umfasst, die den entsprechenden Griff (12a, 12b) mit der entsprechenden ersten Schwenkverbindung verbindet, wobei diese zweite Schwenkverbindung eine Schwenkachse hat, die senkrecht zur Schwenkachse der ersten Schwenkverbindung ist.

6. Vorrichtung nach einem der Ansprüche 1 bis 5, bei der jede Gelenkverbindung (13a, 13b), die von dem Gestell (3) getragen wird, um einen Führungsgriff (12a, 12b) zu montieren, eine elastische Gelenkverbindung ist, die dazu geeignet ist, eine Rückstellkraft zum Rückstellen des genannten mindestens einen Griffes in eine ortsfeste Position in Bezug auf das Gestell auszuüben.

7. Vorrichtung nach einem der Ansprüche 1 bis 6, bei der mindestens einer der genannten Griffe in einem Abstand zum Gestell (3) eine Steuerung (15) umfasst, die mit den Versorgungsmitteln (10) zum Speisen des genannten mindestens einen Motors (9a, 9b, 9c, 9d) derart verbunden ist, dass bei Erfassung einer Betätigung dieser Steuerung (15) die Versorgungsmittel (10) den bzw. die genannten Motoren (9a, 9b, 9c, 9d) speisen.

8. Vorrichtung nach einem der Ansprüche 1 bis 7, bei der zumindest einige der Räder (4a, 4b) derart motorisiert sind, dass sie die Vorrichtung auf dem Boden (2) antreiben, wobei die Vorrichtung ferner ein Steuerungsmodul (21) umfasst, das zumindest mit einigen der Motoren der motorisierten Räder derart verbunden ist, dass es die Speisung dieser Motoren der Räder steuert, wobei die Vorrichtung ferner ein Mittel zur Definition einer Scherfläche umfasst, und der genannte mindestens eine Führungsgriff (12a, 12b) auf abnehmbare Weise an dem Gestell (3) befestigt ist, wobei diese Vorrichtung (1) ferner Mittel (23) umfasst, um das Steuerungsmodul (21) selektiv zu aktivieren oder zu deaktivieren, wobei das Steuerungsmodul (21), wenn es aktiviert ist, dazu geeignet ist, die Verschiebung der Vorrichtung in dieser Scherfläche zu steuern.

9. Vorrichtung nach Anspruch 8, bei der die Mittel (23) zum selektiven Aktivieren oder Deaktivieren des Steuerungsmoduls (21) mit den Befestigungsmitteln zum Befestigen des Griffes (13a, 13b) an dem Gestell (3) derart gekoppelt sind, dass sie die Deaktivierung des Steuerungsmoduls (21) zumindest dann steuern, wenn der genannte mindestens eine Griff (12a, 12b) an dem Gestell befestigt ist.

10. Vorrichtung nach einem der Ansprüche 1 bis 9, bei der jede der Klingen (8a, 8b, 8c) drehbar um eine eigene Rotationsachse gelagert ist, die im Wesentlichen senkrecht zu einer Lagerebene (P) der Räder ist.

11. Vorrichtung nach einem der vorhergehenden Ansprüche, bei der die Griffe miteinander über eine Querverbindung (14) verbunden sind, die dazu geeignet ist, den Abstand zwischen den Griffen zu begrenzen.

12. Vorrichtung nach dem vorhergehenden Anspruch, bei der die Querverbindung mittels einer flexiblen Verbindung (14) erfolgt, die dazu geeignet ist, die Annäherung der Griffe zu gestatten und den Abstand zu begrenzen.

13. Vorrichtung nach dem vorhergehenden Anspruch, bei der die Querverbindung (14) starr und an jedem Griff angelenkt ist, gegebenenfalls mit einer Positionsblockierung der Gelenkverbindung zwischen der Querverbindung und dem Griff.

14. Vorrichtung nach einem der Ansprüche 1 bis 13, bei der der genannte mindestens eine Motor ein Elektromotor ist.

**15.** Schneideeinheit (E1), umfassend mehrere Schneidevorrichtungen (1, D1, D2, D3) nach einem der Ansprüche 1 bis 14, bei der die Gestelle (3) dieser Vorrichtungen miteinander mittels Mitteln (26) zum Koppeln der Vorrichtungen zusammengefügt sind, derart, dass diese Vorrichtungen miteinander verbunden sind, um gleichzeitig auf dem Boden (2) beweglich zu sein, und derart, dass diese Schneideeinheit (E1) eine Gesamtschneidbreite (LcT) hat, die größer als die Schneidbreite (Lc) jeder der so gekoppelten Schneidevorrichtungen ist.

**Claims**

**1.** Device for cutting plants (1) growing on ground (2) including:

  - a chassis (3);
  - a plurality of front wheels (4a, 4b) and rear wheels (5a, 5b) rotatably mounted on the chassis (3) via front rolling axes (6a, 6b) and rear rolling axes (7a, 7b), respectively, and defining at least one maximum axle track (Vmax) formed between some of said wheels (4a, 4b, 5a, 5b);
  - a plurality of plant cutting blades (8a, 8b, 8c, 8d, 8e, 8f) rotatably mounted relative to the chassis (3); and
  - at least one drive motor (9a, 9b, 9c, 9d, 9e) of at least one of said blades (8a, 8b, 8c, 8d, 8e);
  - means (10) for supplying power to said at least one motor (9a, 9b, 9c, 9d, 9e) ; the front rolling axes (6a, 6b) and the rear rolling axes (7a, 7b) are separated from each other by a minimum distance (Dist) less than said at least one maximum axle track (Vmax); wherein the device includes:
  - two guiding handles (12a, 12b); and
  - two articulations (13a, 13b) each connecting one of these handles to the chassis, **characterized in that** these handles can be oriented independently of each other relative to the chassis (3).

**2.** Device according to claim 1, wherein the front and rear rolling axes (6a, 6b, 7a, 7b) are separated from each other by a minimum distance (Dist) less than half said at least one maximum axle track (Vmax) and preferably less than one third of said at least one maximum axle track (Vmax).

**3.** Device according to either one of the preceding claims, including at least one protective grid (11) covering the blades (8a, 8b, 8c, 8d, 8e, 8f), this grid (11) being formed of bars (11a) each extending in its own bar plane, each of these bar planes being perpendicular to said at least one front rolling axis (6a, 6b), these bars (11a) being spaced from one another by a distance of less than 5 centimeters, this distance preferably being between 5 millimeters and 5 centimeters and preferably between 1 and 3 centimeters.

**4.** Device according to any one of claims 1 to 3, wherein each articulation (13a, 13b) attaching a guide handle (12a, 12b) to the chassis has at least one first pivot connection the pivot axis of which is inclined by between 60° and 90° relative to the rolling plane P of the wheels and preferably inclined by 90° relative to the rolling plane P.

**5.** Device according to claim 4, wherein each articulation (13a, 13b) attaching a guide handle (12a, 12b) to the chassis forms a ball joint preferably including in addition to its first pivot connection a second pivot connection connecting the corresponding handle (12a, 12b) to the corresponding first pivot connection, the pivot axis of said second pivot connection being perpendicular to the pivot axis of the first pivot connection.

**6.** Device according to any one of claims 1 to 5, wherein each articulation (13a, 13b) carried by the chassis (3) for attaching a guide handle (12a, 12b) is an elastic articulation which is adapted to exert a force for returning said at least one handle to a fixed position relative to said chassis.

**7.** Device according to any one of claims 1 to 6, wherein at least one of the at least one handles includes a control (15) remote from the chassis (3) connected to the power supply means (10) of said at least one motor (9a, 9b, 9c, 9d) in such a way that on detection of depression of this control (15) the power supply means (10) supply power to the or said at least one motor (9a, 9b, 9c, 9d).

**8.** Device according to any one of claims 1 to 7, wherein at least some of the wheels (4a, 4b) are motorized so as to drive the device over the ground (2), the device further including a control module (21) connected to at least some of the motors of the motorized wheels so as to control the supply of power to these motors of the wheels, the device also including mowing area defining means and said at least one guide handle (12a, 12b) being removably attached to the chassis (3), this device (1) further including means (23) for selectively activating or deactivating the control module (21), the control module (21) when activated being adapted to control the movement of the device in this mowing area.

9. Device according to claim 8, wherein the means (23) for selectively activating or deactivating the control module (21) are coupled to the means for attaching the handle (13a, 13b) to the chassis (3) so as to control the deactivation of the control module (21) at least when at least one handle (12a, 12b) is attached to the chassis.

10. Device according to any one of claims 1 to 9, wherein each of the blades (8a, 8b, 8c) is mounted to rotate about its own rotation axis substantially perpendicular to a rolling plane (P) of the wheels.

11. Device according to any one of the preceding claims, wherein the handles are interconnected by a transverse connection (14) adapted to limit the distance between the handles.

12. Device according to the preceding claim, wherein the transverse connection is provided by a flexible connection (14) adapted to cause the handles to move towards each other and to limit the distance between them.

13. Device according to the preceding claim, wherein the transverse connection (14) is rigid and articulated to each handle, optionally with positional locking of the articulation between the transverse connection and the handle.

14. Device according to any one of claims 1 to 13, wherein said at least one motor is an electric motor.

15. Cutting assembly (E1) including a plurality of cutting devices (1, D1, D2, D3) according to any one of claims 1 to 14 wherein the chassis (3) of these devices are assembled together by device coupling means (26) in such a way that these devices are linked together to be simultaneously movable over the ground (2) and in such a way that this cutting assembly (E1) has a total cutting width (LcT) greater than the cutting width (Lc) of each of the coupled cutting devices.

Fig.1

Fig.2a

Fig.2b

Fig.2c

Fig.3

15b    15a

15

14

12a

12b

1

3    23

P

Dist

P1

11

11a

2

13a;13b

P2

3

7a;7b    6a;6b

i

Fig.4

2

P    P1

1

Fig.5

Fig.6a

Fig.6b

## Fig.7

## Fig.8

Fig.12A

Fig.12A1

Fig.12B

Fig.12B1

Fig.12C

Fig.12D

Fig.12E

Fig.9

Fig.10

Fig.11a

Fig.11b

## RÉFÉRENCES CITÉES DANS LA DESCRIPTION

**Documents brevets cités dans la description**

- GB 2388291 A
- US 4024695 A
- CN 102388720 A
- US 2791876 A
- US 2010300055 A1